Europäisches Patentamt

European Patent Office

Office européen des brevets

(11) Publication number : **0 682 091 A2**

(12) **EUROPEAN PATENT APPLICATION**

(21) Application number : 95850091.0

(22) Date of filing : 12.05.95

(51) Int. Cl.⁶ : **C09D 5/14**

(30) Priority : 13.05.94 FI 942217

(43) Date of publication of application :
15.11.95 Bulletin 95/46

(84) Designated Contracting States :
AT BE CH DE DK FR GB IT LI NL SE

(71) Applicant : **KYMMENE OY**
Mikonkatu 15 A
SF-00100 Helsinki (FI)

(71) Applicant : **KOSKISEN OY**
SF-16600 Järvelä (FI)

(71) Applicant : **METSÄLIITTO OSUUSKUNTA**
Revontulentie 6
SF-02100 Espoo (FI)

(72) Inventor : **Lehtonen, Markku**
Tuulimyllynkuja 15
SF-08350 Routio (FI)
Inventor : **Ahola, Pirjo**
Espoonlahdentie 16 A
SF-02360 Espoo (FI)
Inventor : **Ritschkoff, Anne-Christine**
Agricolankatu 7 C
SF-00530 Helsinki (FI)
Inventor : **Viikari, Liisa**
Lokkikuja 5
SF-00200 Helsinki (FI)
Inventor : **Lähteenmäki, Marku**
Tervatie 6 D 5
SF-15870 Hollola (FI)
Inventor : **Korpela, Jaakko**
Yrjönkatu 15 D 28
SF-40100 Jyväskylä (FI)

(74) Representative : **Modin, Jan et al**
c/o Axel Ehrners Patentbyra AB
Box 10316
S-100 55 Stockholm (SE)

(54) **Surface treatment composition and a method for protecting the surfaces of building materials against undesirable reactions caused by microorganisms.**

(57)   The invention relates to a surface treatment composition, which contains a solvent, a binder and a substance which prevents the growth and spreading of microorganisms, a process for preparing such a composition and a method for protecting lumber against undesirable reactions caused by mould, blue-stain fungi and decay fungi and similar microorganisms. According to the present invention the substance which prevents the growth and spreading of microorganisms at least essentially is formed by a complexing agent capable of binding transition metals. Preferably the complexing agent is an inorganic phosphate compound, an aminopolycarboxylic acid or a salt thereof, a hydroxy acid or a salt thereof or an organophosphate or a salt thereof or a metal-binding protein (siderophore). By using complexing agents as the main fungicidal components of paints it because possible to protect both the painted surface and the paint surface from moulding and blue-staining by means of a harmless, inexpensive substance.

The present invention relates to a surface treatment composition in accordance with the preamble of claim 1.

Such a composition generally contains a solvent, a binder and a substance capable of preventing the growth and spread of microorganisms in wood.

The present invention also deals with a method according to the preamble of claim 9 for protecting the surfaces of building materials against damages and undesirable reactions caused by mould, blue-stain fungi and decay fungi and similar micro-organisms.

Mould and blue-stain fungi damage wooden building materials as well as other material by causing decolorization, odour problems, and health hazards. Moulds belonging to the genera *Caldosporium, Alternaria, Helminthoporus, Penicillium, Aspergillus, Epicoccus* and *Rhizopus* can be mentioned as examples of particularly harmful fungi. Of these microorganisms, great damages to constructions and to interior parts of buildings are caused by moulds of the genera *Penicillium* and *Aspergillus*. The blue-stain fungi appearing on wood surfaces typically belong to the genera *Ambrosiella, Aureobasidium, Ceratocystis, Cladosporium* and *Phialophora. Aureobasidium pullulans* and strains of the *Ceratocystis* genera (e.g. *Ceratocystis pilifera*) can be mentioned as examples of the most common blue-stain fungi on pine sawn wood. Blue-staining of spruce sawn wood is caused, in addition to the above-mentioned, by for instance *C. piceae* and *C. coerulescens*. Furthermore, fungal strains belonging to the genera *Sclerophoma,* such as *Sclerophoma entoxylina*, appear on sawn wood of coniferous tree. The fungi also thrive on stone and concrete surfaces as well as in plastics and insulation materials.

The above-mentioned organisms often appear on painted surfaces and damage their appearance. They can also easily grow and spread through paint films and cause damages to the painted structure. Thus, decay fungi, such as *Gloephyllum saepiarium* and *Coniophora puteana*, give rise to rotting of painted wood products such as weather stripping panels and outdoor constructions (fences). In Norway and Sweden damages to exterior constructions are known to be caused by *Dacromyces stillatus*, but so far there are only few reports on such damages in Finland. The afore-mentioned fungi belong to the group of brown rot fungi, which decompose the structural components of wood, i.e. cellulose and hemicellulose, via hydrolytic and oxidative radical mechanisms. Conventionally the decay of wood is characterized by the weight loss of the wood.

In order to prevent moulds and fungi from growing and spreading on painted surfaces and from penetrating the paint films, fungicidal components are added to paints and similar surface treatment compositions. The presently used wood preservatives can coarsely be classified in three categories:

1) water-borne preservatives, typically comprising salt preservatives containing copper, chromium and arsenic (CCA preservatives) as the active ingredient,
2) oil-borne preservatives containing organic fungicides such as tributyl tin naphthenate, tributyl tin oxide, mixtures of penta- and tetrachlorophenols, phoxim and dichlofluanid, and
3) creosote oil (a fraction of coal tar distilling above 200 °C).

Several considerable disadvantages are, however, related to the presently used fungicides. Most of them are insoluble in water, which makes it difficult to mix them with water-borne paint compositions. Furthermore, the efficacy of the common preservatives is based on their general toxicity which is generally directed towards the basic (vital) metabolic reactions common to all living organisms.

It is an object of the present invention to eliminate the drawbacks of the prior art and to provide an entirely novel surface treatment composition.

The present invention is based on the surprising finding that by adding to a water- or oil-borne paint a complexing agent which is capable of binding transition metals, the spread and growth of microorganisms is largely prevented. This makes it possible to protect the painted structure against undesirable reactions caused by the above microorganisms, while at the same time preventing moulding of the paint surface itself. More specifically, the composition according to the present invention is mainly characterized by what is stated in the characterizing part of claim 1.

The invention also provides an entirely novel method for protecting wooden products against undesirable reactions caused by moulds, blue-stain fungi and other similar microorganisms, which comprises applying to the surface of the product at least one surface treatment composition, preferably two surface treatment compositions, the first surface treatment composition containing a complexing agent capable of forming complexes with transition metals natively appearing in wood, and a binder, which applied to the wood will form a layer at least partially covering the wood. This layer is at least partially uniform (= it forms a film) and will prevents the washing out of the complexing agent from the wood. The second surface treatment composition is applied on top of the first surface treatment composition, and it preferably contains in addition to a complexing agent and a binder also pigments and possibly fillers to provide an opaque surface.

More specifically, the method according to the present invention is characterized by what is stated in the characterizing part of claim 9.

It is known in the art to protect wood from decay by a method involving complexing the transition metals essential for the decay mechanism of the decay fungi into a form which the fungi cannot use (cf. WO Published Patent Application No. WO 93/08971).

In connection with the present invention is unexpectedly been found that, by using complexing agents, it is possible to prevent the growth and spread of moulds and blue-stain fungi also in surface treatment compositions and in materials treated with these. The last-mentioned microorganisms do not cause wood decay and to not remove structural components of wood to any larger extent. Thus, the complexing agents, such as the aminocarboxylates, do not interfer with any decay mechanism, but their effect would appear to be based on their ability to remove the metals essential for the growth of the fungi (the trace metals) from the substrate and also from the cell membranes of the microorganisms by forming complexes with the metals. This will prevent normal ion exchange between the cell membrane and the surroundings.

In the context of the present invention, the term "undesirable reactions" of microorganisms refers to decolorization, wood degradation and decay caused principally by fungi and moulds.

The term "complexing agent" (or "chelating agent") designates compounds capable of binding di- or trivalent cations, particularly transition metals, such as Fe and Mn, into insoluble or soluble complexes.

Complexing agents can be divided into inorganic and organic compounds. Inorganic complexing agents are formed by different kinds of cyclic and linear phosphate compounds, e.g., polyphosphates such as sodium tripolyphosphate ($Na_5P_3O_{10}$, STPP). The most important organic complexing agents employed are amino polycarboxyl acids and their salts (amino carboxylates) in which the acid part is formed by acetic acid [examples representing such agents being ethylenediaminetetraacetic acid (EDTA), nitrilotriacetic acid (NTA), n-hydroxyethyl-etylenediaminetriacetic acid (HEDTA), di-etylenetriaminepentaacetic acid (DTPA), etylenediamine-di-(o-hydroxyphenylacetic acid (EDDHDA), diethanolglycine (DEG) and ethanolglycine (EDG)], hydroxy acids (gluconic acid, glucoheptonic acid and other sugar acids such as β-glucoisosaccaric acid, α-isosaccaric acid, tartaric acid, malic acid and citric acid) and their salts, as well as organophosphates in which the acid part is formed by phosphoric acid [examples of such acids being aminotrimethylenephosphonic acid (ATMP), 1-hydroxyethylidene-1,1-diphosphonic acid (HEDP), ethylenediaminetetramethylenephosphonic acid (EDTMP), diethylenetriaminepentamethylenephosphonic acid (DTPMP)] and their salts.

The invention can also be implemented using siderophores. These compounds are metal-binding proteins produced by microorganisms capable of binding metal ions, in particular transition metals (e.g. Fe, Mn), contained culture medium for use by the organisms. In nature, the microorganisms compete for the limited trace metal resources by using their siderophores. As an example of a applicable, commercial-grade siderophore, desferal can be mentioned.

In particular, the present invention is implemented using an organic chelating agent as the complexing agent such as, preferably, aminopolycarboxylic acid or a salt thereof, such as EDTA, NTA, DTPA and/or HEDTA or a salt thereof. In the examples accounted for below ethylenediaminetetra-acetate (EDTAc) has been used. Said compound is water-soluble as many of the other preferred complexing agents.

"Building materials" or "structural materials" cover both fibrous and mineral-based materials.

In the context of the present invention, the terms "wood" and "wooden products" are interchangeably used to refer to both felled timber (e.g., logs) and sawn wood, as well as wood in service (e.g., wood in constructions). Said terms also cover different kinds of veneer and fibrous boards (e.g. chipboards). Both deciduous and coniferous wood and wooden products can be treated. Particularly advantageously, the invention is suited to preserving sawn coniferous wood, typically pine wood, against rot fungi, blue-stain fungi and mould fungi.

According to the present invention, the term "surface treatment composition" covers both products used for base coating of surfaces (in the following "primers") as well as actual surface treatment compositions, such as paints.

The primers of the present invention are compositions known as wood preservatives and ground coats or colours. The wood preservatives contain one or several solvents (at least 10 wt-%), at least some amount of a binding agent (at least 1 wt-%) and about 0.01 to 10 wt-% of a fungicidal component which will be absorbed to the treated surface from the primer. The ground colours include in addition to the above components also possibly some pigments, fillers and adjuvents and auxiliary agents. The primers are used for protecting the surface from mould and blue-stain and decay fungi. The amounts of fungicides contained in them is, for this reason, usually rather high.

The surface treatment compositions, such as conventional paints, are usually applied to a surface which first has been treated with a primer. They contain more binding agents that the primers and typically form a uniform film upon the surface. According to the present invention, these compositions contain about 0.01 to 10 % by weight of the complexing agent used for preventing growth and spreading of microorganisms.

The surface treatment compositions according to the present invention can be either water-dilutable, i.e. water-borne, or solvent-borne, i.e. oil-based. In the water-borne paints the aqueous phase forms a diluent into which the other components are dispersed usually by means of surfactants. The binders of these paints are, for instance, comprised of synthetic latices which are composed of polymers or copolymers of ethylenically unsaturated compounds, e.g., butadiene-styrene copolymers which possibly further contain a comonomer having a carboxyl group such as acrylic acid, itaconic acid, or maleic acid, and polyvinyl acetate which contains a comonomer with carboxyl groups. Binders which can be used together with the above-listed agents are comprised of starch or casein, poly(vinyl alcohol) and polymers of low molecular weight having carboxyl groups. The last-mentioned can be exemplified by the polycarbonates which can act as dispersing agents at the same time.

The binders of solvent-borne paints are comprised of substances which will polymerize once the solvent evaporates, i.e. when the paint dries. These kinds of substances are represented by oils (linseed and pine oil) and alkydes (esterified natural oils). Mineral turpentine is one of the most common solvents.

The binder content of the primers and the paints is at least 1 wt-%, usually less than 85 wt-%, and typically about 10 to 60 wt-%.

Depending on their content of pigments and fillers, the surface protecting agents according to the present invention can be grouped into three categories. Thus, clear surface protecting agents do not contain either components, whereas transparent contain pigments but no fillers. Opaque preservatives contain both pigments and fillers. The fillers used in primers and surface treatment compositions can be exemplified by talcum, clay, calcium carbonate, calcium sulphate, aluminium silicates and aluminium hydroxide, aluminium magnesium silicates and barium sulphate.

For the purpose of the present invention the term "solvent" is used to designate the liquid components of both water-borne compositions and oil-based compositions, i.e. water and the corresponding solvents. As mentioned above, water is not a true solvent but rather a dispersion medium in water-diluted compositions. The amount of solvent present in primer can be as high as over 90 %, usually however less than 80 %. Paints generally contain less than 30 to 40 % of a solvent. In some cases it is possible to prepare paint compositions which are liquid even without any specific solvent. The present invention also covers these kinds of products.

According to the present invention the complexing agent is added to the water-borne paint or it is dispersed into the oil-based paint. Typically 0.01 to 10 parts by weight of the complexing agent are admixed with the binder and the solvent. The complexing agents may bound the metal ions of the pigments and other components of the paint. The formation of such complexes will demonstrate itself as an increase of the paint vinosity. One embodiment of the method aims at binding those metals of the paint, which form trace substances for the moulds and fungi. This will, at the same time, prevent metal-intermediated metabolic reactions, which occur in the cell membrane of fungi, and decrease the activity of enzymes produced by the fungi. The growth and spreading of the decay fungi is stopped since the active ingredient contained in the paint is acting directly on the decay mechanism of the fungi and also on the cell membrane of the growing mycelium. In short, the complexing agent binds the metal ions present in the paint, preventing the moulds and the blue-stain fungi from growing and spreading in the paint. The complexing agent also acts as a thickener of the paint.

The concentration of the complexing agent(s) in the solvent can vary widely. Normally it is about 0.01 to 20.0 %, preferably about 0.1 to 10.0 %, of the weight of the solution. Even amounts of less than 5 wt-% are possible. It is preferred to use water as a solvent for the complexing agents and the solution may contain other adjuvants known per se, which will promote dispersion of the solution into an oil-based paint. In addition to biologically inert adjuvants, the wood protective according to the invention may also contain known biologically active compounds, for instance (e.g. 0.01 to 5 wt-%) of a known fungicide, such as one of those mentioned above. In the surface treatment compositions according to the invention, the "main" fungicide is however the complexing agent, which means that it amounts for at least over half of the total weight of the fungicidally active components.

According to a preferred embodiment, the surface treatment composition contains, based on its weight, 1 - 98,9 % of at least one solvent, 1 - 85 % of at least one binder and 0.1 to 15 % of one or more complexing agents. In addition to these components the compositions can contain about 1 to 20 wt-% of at least one pigment and/or 1 to 30 wt-% of filler(s) (calculated on the total weight of the other components).

According to a particularly preferred embodiment, the surface treatment compositions contains water as solvent, a butadiene-styrene-copolymer-based latex and, as complexing agent, EDTA or a alkali metal salt thereof (such as the sodium salt).

The invention can be employed for protecting painted wooden and other surfaces against undesirable reactions caused by any of the above-mentioned microorganisms. It is preferred to use the invention for protecting weather stripping panels, window constructions, fences etc.

The present invention provides considerable advantages. The surface treatment composition according to the invention prevents the growth of mould and blue-stain fungi in the paint film, on the paint film, and through the paint film on the surface of the substrate. The paint film formed by the binder of the surface treatment composition and containing the complexing agent will also prevent decay fungi from penetrating the paint film and getting in contact with the wood. The fungicidal component or effective component used in the present invention is water-soluble and in thus biocompatible. It does not either contain any substances with general toxicity, but is on the contrary rather specific against microorganisms which cause biological damages to painted surfaces and the surface below that. The method according to the invention, efficiently utilizes the ability of chemical complexing agents and siderophores produced by microorganisms to bind transition metals and other bioactive components of the growth substrate in order to prevent growth and spreading of the fungi.

A particular advantage of the present invention resides in the fact that the paint surface prevents the washing-out of the complexing agent from the painted substrate.

In the following the invention will be described in more detail with the aid of some working examples.

## Example 1

### Prevention of the moulding and blue-staining of a painted surface

#### A. Experimental

The examined paints included two water-diluent paints, viz. REMONTTI-ÄSSÄ, which is recommended for indoor use, and ULTRA, which is intended for outdoor use. Both paints are produced and marketed by Tikkurila Oy, Vantaa, Finland. The tested amount of a chelating agent (10 wt-%) was admixed with the paints in a small amount of water. The complexing agent used was ethylenediamine tetraacetate (EDTAc). After the addition of the complexing agent the viscosity of the paint was determined with a Brookfield-meter.

The paint substrates selected comprised pine splint wood specimens which are known natively to have poor resistance against moulding and blue-staining. The test specimens (50 x 30 x 15 mm) were throughout painted twice. As reference samples, unpainted pine splint wood specimens and painted specimens not containing complexing agents were used.

The resistance of the samples against moulding and blue-staining were examined in a balancing room having a relative humidity of 90 %. The samples were incubated with a suspension containing three mould fungi (*Aspergillus versicolor* (E1), *Gladosporium sphaerospermum* (R7), *Penicillium sp.* (1017)) and three blue-stain fungi (*Aure- obasidium pullulans* (T1), *Sclerophoma entoxylina* (Z17), *Ceratocystis pilifera* (Z11)).

For the moulding and blue-staining tests six parallel specimens were selected from each treatment (REMONTTI-ÄSSÄ + EDTA, ULTRA + EDTA, REMONTTI-ÄSSÄ, ULTRA and the unpainted samples). The sample surfaces were visually and, if necessary, microscopically inspected each two weeks. The moulding and blue-staining of the samples were evaluated according to a scale from 0 to 4.

0 clean
1 traces of growth
2 moderate growth (ca 25 % of the sample's area is covered by fungal growth)
3 abundant growth (ca 50 % of the sample's area is covered by fungal growth)
4 extremely abundant growth (> 50 % of the sample's area is covered by fungal growth)

#### B. Results

The influence of the complexing agent on the viscosity of water-diluted paint

The viscosity of the paint was determined by a Brookfield viscosimeter before the addition of EDTA and afterwards. The content of the complexing agent or chelator was 10 wt-% and it increases the viscosity of the paint. This is particularly clearly seen in the paint called ULTRA, which is suitable for outdoor use. Because the complexing agent influences the viscosity of the paint, the complexing agent can be used not only as a fungicidal component by also as a thickener of the paint.

**Table 1**

| Paint viscosity determined with a Brookfield-meter | |
|---|---|
| Paint | Viscosity (mPas$^{-1}$) |
| REMONTTI-ÄSSÄ | 22,300 |
| REMONTTI-ÄSSÄ + EDTA | 24,950 |
| ULTRA | 7,450 |
| ULTRA + EDTA | 23,950 |

The efficacy of the complexing agents against moulding and blue-staining of the substrate which is to be painted; incubation time 6 weeks

## Table 2. Moulding in a balancing room

| Treatment | Growth 0 - 4 |
|---|---|
| Remontti-Ässä | 4 |
| Remontti-Ässä + EDTA | 1 |
| Ultra | 0 |
| Ultra + EDTA | 0 |

The complexing agents prevented the growth of moulds and blue-stain fungi on a latex-based paint film as well as on the painted substrate beneath it (spruce splint wood).

## Example 2

The distribution of the active component between the paint and the painted substrate

Colouring tests

Painted samples of spruce splint wood (50 x 30 x 15 mm) were cleaved in the middle. The cleaving surface was brushed with a chromazyl reagent (0.5 % Chromatzyl-S) and the colour of the cleaving surface was visually examined. The chromazyl reagent reacts with wood containing a complexing agent in a different way than with native wood. This difference manifests itself as a colour change. The controls of the test were comprised of specimens, which were painted with a paint not containing any complexing agent.

When the coloured cleaving surface was examined, it could be found that the complexing agent had penetrated the wood to a depth of some cell layers (to a depth of about 0.5 to 1 mm, at best). Based on the colouring method it is obvious that most of the effective compound remains in the paint, which allows for effective prevention of any moulding of the painted surface.

Determination of the distribution of the effective substance by radioactive EDTA

The EDTA which was admixed with the paint consisted of a known proportion of C$^{14}$-EDTA. Paint was scratched from the surface of the samples, and the weight of that paint was determined. The EDTA-content of the paint was determined on basis of C$^{14}$-EDTA scintillations (by a scintillator). A sample was also taken from wood below the paint film, and the EDTA-concentration was determined in a corresponding manner. The results were adjusted to whole specimen and the absorption of EDTA from the paint into the wood was evaluated.

The afore-described method confirms the above-mentioned, visual finding that EDTA penetrates from the paint into the wood to a depth of at least a couple of cell layers.

## Claims

1. Surface treatment composition, containing
   - a solvent,
   - a binder and
   - a substance which prevents the growth and spreading of microorganisms,
   **characterized** in that
      - the substance which prevents the growth and spreading of microorganisms at least essentially is formed of a complexing agent capable of binding transition metals.

2. The composition according to claim 1, wherein the complexing agent is an inorganic phosphate compound, an aminopolycarboxylic acid or a salt thereof, a hydroxy acid or a salt thereof or an organophosphate or a salt thereof or a metal-binding protein (siderophore).

3. The composition according to claim 2, wherein the complexing agent is selected from the group consisting of EDTA, NTA, DTPA and HEDTA and salts thereof.

4. The composition according to any of claims 1 to 3, which contains, calculated on basis of its weight,
      - 0.01 to 10.0 % of the complexing agent.

5. The composition according to claim 4, which contains, calculated on basis of its weight,
   - 1 to 98.9 % of the solvent
   - 1 to 85 % of the binder and
   - 0.1 to 5 % of the complexing agent.

6. The composition according to any of the previous claims which further contains, calculated on basis of the weight of the other components, 1 to 20 % of a pigment and/or 1 to 30 % of a filler.

7. The composition according to any of the previous claims wherein the binder is selected from the group consisting of synthetic latexes, starch, casein, poly(vinyl alcohol), polycarbonate, lin seed or tall oil and alkyd.

8. The composition according to any of the previous claims. which contains in addition to the complexing agent a further, known fungicide in an amount of 0.01 to 5 wt-%.

9. A method for protecting wooden products against undesirable reactions caused by moulds, blue-stain fungi and other similar microorganisms, comprising the steps of
      - applying to the surface of the wood at least one surface treatment composition which contains a substance preventing the growth and spreading of microorganisms,
   **characterized** in that
      - using as a first surface treatment composition a product containing
   - a complexing agent, capable of forming complexes with transition metals natively appearing in wood, and
   - a binder, which applied to the wood will form a layer at least partially covering the wood, said layer preventing the washing out of the complexing agent from the wood.

10. The method according to claim 9, wherein a second surface treatment composition is applied on top of the first surface treatment composition, said second composition containing a complexing agents, a binder, pigments and possibly fillers.

11. A process for preparing a surface treatment composition, comprising the steps of mixing together a solvent, a binder and possibly pigments and fillers in order to form a solution or a dispersion, **characterized** in that 0.01 to 10 parts by weight of a chelating agent, such as an aminocarboxylate, is admixed with the solution or dispersion.

12. The use of complexing agents as the main fungicidal components of paints.